# EUROPEAN PATENT APPLICATION

(11) **EP 4 624 130 A1**
(43) Date of publication of application: **01.10.2025**
(21) Application number: 22966449.5
(22) Date of filing: 22.11.2022
(51) Int. Cl.: B29C 45/14

(54) **INSERT-MOLDED ARTICLE AND SENSOR DEVICE**

(71) Applicant: JTEKT Corporation, Kariya-shi, Aichi 448-8652 (JP); Japan Automatic Machine Co., Ltd., Tokyo 146-0092 (JP)
(72) Inventor: NONOYAMA, Toshio, Kariya-shi, Aichi 448-8652 (JP); TOYAMA, Yuichi, Kariya-shi, Aichi 448-8652 (JP); KUMAKURA, Atsushi, Tokyo 146-0092 (JP)
(74) Representative: Winter, Brandl - Partnerschaft mbB
(86) International application number: PCT/JP2022/043107
(87) International publication number: WO 2024/111039

(57) **Abstract**

An insert molded product (40) includes: a terminal (48) including a pin (48A); a first holding member (60) including a terminal holding portion (62) that holds the terminal; a second holding member (70) including a covering portion (71) that covers the terminal holding portion; and a resin member (40A) covering the periphery of a portion of the terminal that is located inside the terminal holding portion, the periphery of the first holding member, and the periphery of the second holding member. The covering portion includes a resin inlet hole (71A) configured to guide molten resin into the terminal holding portion during molding of the resin member, and a protrusion (73) provided at a position closer to the pin than the resin inlet hole and combined with the first holding member. The terminal holding portion and the pin are isolated from each other by the protrusion and the portion of the terminal.

## Description

### TECHNICAL FIELD

The present disclosure relates to insert molded products and sensor devices.

### BACKGROUND ART

For example, a torque sensor of Patent Document 1 includes a sensor board, a harness, and a board holder. The board holder houses part of the harness and the sensor board. The harness is led from the inside to the outside of the board holder. The inner end of the harness is connected to the sensor board via a terminal. The terminal extends through the sensor board in a thickness direction and is fixed to the sensor board. The torque sensor is of a magnetic type and has a magnetic yoke. The magnetic yoke and the substrate holder are integrated using synthetic resin.

### Related Art Documents

### Patent Documents

Patent Document 1: Japanese Unexamined Patent Application Publication No. 2017-075920 (JP 2017-075920 A)

### SUMMARY OF THE INVENTION

### Problem to be Solved by the Invention

In a type of sensor in which components are integrated using synthetic resin such as the torque sensor of Patent Document 1, molten synthetic resin may flow into a portion where it is not supposed to during molding.

### Means for Solving the Problem

An insert molded product according to one aspect of the present disclosure includes: a terminal including a first end provided with a pin, and a second end located on an opposite side from the first end; a first holding member including a terminal holding portion that holds the terminal in a state in which the terminal is inserted in the terminal holding portion; a second holding member combined with the first holding member and including a covering portion that covers the terminal holding portion; and a resin member covering the periphery of a portion of the terminal that is located inside the terminal holding portion, the periphery of the first holding member, and the periphery of the second holding member. The covering portion includes a resin inlet hole configured to guide molten resin into the terminal holding portion during molding of the resin member, and a protrusion provided at a position closer to the pin than the resin inlet hole and combined with the first holding member. The terminal holding portion and the pin are isolated from each other by the protrusion and the portion of the terminal.

A sensor device according to one aspect of the present disclosure includes the insert molded product described above.

### BRIEF DESCRIPTION OF THE DRAWINGS

[FIG. 1] FIG. 1 is an exploded perspective view of a sensor device according to an embodiment.
[FIG. 2] FIG. 2 is an exploded perspective view of a detection unit according to the embodiment.
[FIG. 3] FIG. 3 is a perspective view of a board-in connector according to the embodiment.
[FIG. 4] FIG. 4 is an exploded perspective view of the board-in connector according to the embodiment.
[FIG. 5] FIG. 5 is a front view of a terminal according to the embodiment.
[FIG. 6] FIG. 6 is a perspective view of the terminal according to the embodiment.
[FIG. 7] FIG. 7 is a side view of the terminal according to the embodiment.
[FIG. 8] FIG. 8 is a sectional view of the board-in connector according to the embodiment.
[FIG. 9] FIG. 9 is a perspective view of a cover according to the embodiment.
[FIG. 10] FIG. 10 is a perspective view of a cover with terminals attached thereto according to the embodiment.
[FIG. 11] FIG. 11 is a sectional perspective view of the board-in connector according to the embodiment.
[FIG. 12] FIG. 12 is a sectional perspective view of the board-in connector according to the embodiment.

### MODES FOR CARRYING OUT THE INVENTION

A sensor device according to an embodiment will be described. The sensor device is, for example, a torque sensor.

### <Overall Configuration of Sensor Device 10>

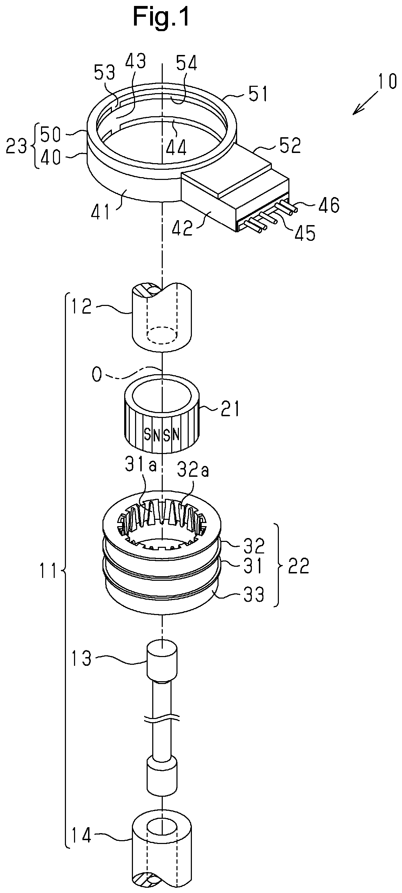

As shown in FIG. 1, a sensor device 10 is provided on a rotation shaft 11 that is a target to be detected. The rotation shaft 11 includes an input shaft 12, a torsion bar 13, and an output shaft 14. The input shaft 12 and the output shaft 14 are coupled to each other via the torsion bar 13. The input shaft 12, the torsion bar 13, and the output shaft 14 are located on the same axis O. The rotation shaft 11 is, for example, a steering shaft of a steering system of a vehicle. A steering wheel is coupled to the steering shaft so as to be rotatable with the steering shaft.

The sensor device 10 detects torque applied to the rotation shaft 11 through operation of the steering wheel. The sensor device 10 includes a permanent magnet 21, a magnetic yoke 22, and a detection unit 23.

The permanent magnet 21 has a tubular shape and a circular cross section. The permanent magnet 21 is magnetized such that south poles and north poles appear alternately in the circumferential direction of the permanent magnet 21. The inner peripheral surface of the permanent magnet 21 is fitted and fixed on the outer peripheral surface of the input shaft 12. The permanent magnet 21 is rotatable with the input shaft 12.

The magnetic yoke 22 has a tubular shape and a circular cross section. The permanent magnet 21 is kept inserted in the magnetic yoke 22. The magnetic yoke 22 includes a first yoke 31, a second yoke 32, and a holder 33. The first yoke 31 and the second yoke 32 are annular members each made of a magnetic material. The first yoke 31 and the second yoke 32 are arranged along the axis O of the rotation shaft 11. The magnetic yoke 22 is formed by molding synthetic resin around the first yoke 31 and the second yoke 32. The holder 33 is a portion of the magnetic yoke 22 that is made of synthetic resin. The holder 33 maintains the positional relationship between the first yoke 31 and the second yoke 32. The magnetic yoke 22 is fixed on the output shaft 14.

The first yoke 31 includes a plurality of teeth 31a. The teeth 31a are arranged at equal intervals in the circumferential direction of the first yoke 31. The second yoke 32 includes a plurality of teeth 32a. The teeth 32a are arranged at equal intervals in the circumferential direction of the second yoke 32. The teeth 31a and the teeth 32a extend in opposite directions along the axis O of the rotation shaft 11. The teeth 31a and the teeth 32a are disposed alternately in the circumferential direction of the first yoke 31 and the second yoke 32. When no torsional deformation occurs in the torsion bar 13, the circumferential centers of the teeth 31a, 32a coincide with the boundaries between the north and south poles of the permanent magnet 21. The permanent magnet 21, the first yoke 31, and the second yoke 32 form a magnetic circuit.

The detection unit 23 generates an electrical signal according to the amount of torsion of the torsion bar 13. The detection unit 23 includes a first sensor housing 40 and a second sensor housing 50. The first sensor housing 40 and the second sensor housing 50 are combined together in an axial direction.

The first sensor housing 40 is a resin molded product. The first sensor housing 40 includes a first housing body 41 and a first protruding portion 42. The first housing body 41 has a tubular shape and has a first insertion hole 43 extending through the first housing body 41 in the axial direction. The inside diameter of the first insertion hole 43 is slightly larger than the outside diameter of the magnetic yoke 22. The portion of the magnetic yoke 22 provided with the first yoke 31 is inserted into the first insertion hole 43 in the axial direction and kept inserted therein. The first protruding portion 42 has a rectangular parallelepiped shape and protrudes radially outward from the outer peripheral surface of the first housing body 41.

The first housing body 41 is provided with a first magnetic flux collecting ring 44. The first magnetic flux collecting ring 44 is in the form of an arc-shaped plate curved along the inner peripheral surface of the first insertion hole 43. The inner peripheral surface of the first magnetic flux collecting ring 44 is exposed inside the first insertion hole 43. The first magnetic flux collecting ring 44 is held at a position corresponding to the first yoke 31 in the axial direction. The first magnetic flux collecting ring 44 surrounds the first yoke 31. The first magnetic flux collecting ring 44 guides magnetic flux from the first yoke 31.

A board-in connector 45 is provided inside the first protruding portion 42. A first end of the board-in connector 45 is exposed to the outside. The first end is the opposite end of the board-in connector 45 from the first housing body 41 in a radial direction. The board-in connector 45 holds a plurality of electric wires 46. The electric wire 46 is, for example, a coated wire in which a core is coated with an insulator. The plurality of electric wires 46 is disposed at intervals in a direction perpendicular to the direction in which the first protruding portion 42 protrudes. A first end of the electric wire 46 is led from the first end of the board-in connector 45 to the outside. The first end is connected to an external device. The external device is, for example, a control device for the steering system.

The first magnetic flux collecting ring 44 and the board-in connector 45 are provided integrally with the first sensor housing 40 by insert molding. The insert molding is a molding technique in which an insert is placed into an open mold and then the mold is closed to perform injection molding. The first sensor housing 40 is an insert molded product. The first magnetic flux collecting ring 44 and the board-in connector 45 are inserts.

The second sensor housing 50 is a resin molded product. The second sensor housing 50 includes a second housing body 51 and a second protruding portion 52. The second housing body 51 has a tubular shape and has a second insertion hole 53 extending through the second housing body 51 in the axial direction. The inside diameter of the second insertion hole 53 is the same as the inside diameter of the first insertion hole 42 and is slightly larger than the outside diameter of the magnetic yoke 22. The portion of the magnetic yoke 22 provided with the second yoke 32 is inserted into the second insertion hole 53 in the axial direction and kept inserted therein. The second protruding portion 52 is in the form of a rectangular flat plate and protrudes radially outward from the outer peripheral surface of the second housing body 51. The second protruding portion 52 is placed on top of the first protruding portion 42 in the axial direction.

The second housing body 51 is provided with a second magnetic flux collecting ring 54. Like the first magnetic flux collecting ring 44, the second magnetic flux collecting ring 54 is provided integrally with the second sensor housing 50 by insert molding. The second magnetic flux collecting ring 54 is in the form of an arc-shaped plate curved along the inner peripheral surface of the second insertion hole 53. The inner peripheral surface of the second magnetic flux collecting ring 54 is exposed inside the second insertion hole 53. The second magnetic flux collecting ring 54 is held at a position corresponding to the second yoke 32 in the axial direction. The second magnetic flux collecting ring 54 surrounds the second yoke 32. The second magnetic flux collecting ring 54 guides magnetic flux from the second yoke 32.

### <Supplementary Description of Detection Unit 23>

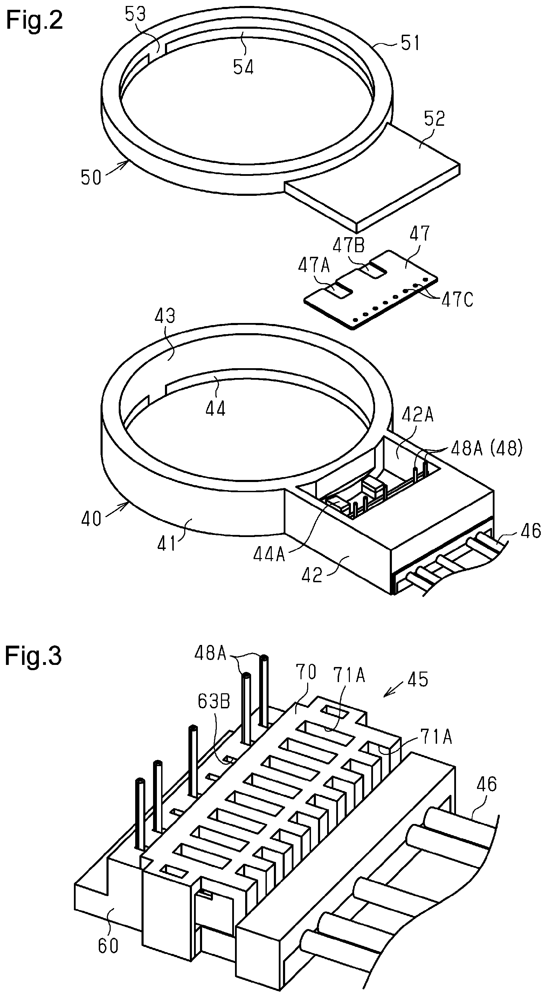

As shown in FIG. 2, the first protruding portion 42 includes a board housing portion 42A. The board housing portion 42A is open in the axial direction. The opening of the board housing portion 42A is closed by the second protruding portion 52. Two first magnetic flux collecting protrusions 44A are exposed inside the board housing portion 42A. The first magnetic flux collecting protrusion 44A is part of the first magnetic flux collecting ring 44. The first magnetic flux collecting protrusion 44A protrudes outward from the peripheral wall of the first housing body 41. Pins 48A of a plurality of terminals 48 described later are disposed inside the board housing portion 42A. The terminal 48 is attached to a second end of the electric wire 47. The pin 48A extends in the axial direction. The plurality of pins 48A is arranged in a row along the long side direction of the board housing portion 42A.

A board 47 is housed inside the board housing portion 42A. The board 47 is in the form of, for example, a rectangular flat plate. The board 47 includes a first magnetic sensor 47A, a second magnetic sensor 47B, and a plurality of terminal connection holes 47C. The first magnetic sensor 47A and the second magnetic sensor 47B are arranged along a first long side of the board 47. The first magnetic sensor 47A and the second magnetic sensor 47B are sensors for detecting the rotation angle of the rotation shaft 11 and are, for example, Hall sensors. The rotation angle of the rotation shaft 11 is a physical quantity related to the rotational motion of the rotation shaft 11. The plurality of terminal connection holes 47C is arranged in a row along a second long side of the board 47. The pin 48A is inserted into the terminal connection hole 47C. The pin 48A is joined to the board 47 by soldering.

Although not shown in the figures, the second magnetic flux collecting ring 54 has two second magnetic flux collecting protrusions like the first magnetic flux collecting ring 44. The second magnetic flux collecting protrusions are disposed along the surface of the second protruding portion 52 that faces the board housing portion 42A. The second magnetic flux collecting protrusion protrudes outward from the peripheral wall of the second housing body 51. The second magnetic flux collecting protrusion faces the first magnetic flux collecting protrusion 44A in the axial direction. Each of the first magnetic sensor 47A and the second magnetic sensor 47B is interposed between a corresponding one of the first magnetic flux collecting protrusions 44A and a corresponding one of the second magnetic flux collecting protrusions. The first magnetic sensor 47A detects magnetic flux guided to the first magnetic flux collecting ring 44. The second magnetic sensor 47B detects magnetic flux guided to the second magnetic flux collecting ring 52.

When torque is applied to the input shaft 12, the torsion bar 13 undergoes torsional deformation. A relative rotational displacement occurs between the input shaft 12 and the output shaft 14 according to the torque applied to the input shaft 12. As a result, the relative positions of the permanent magnet 21 and the first yoke 31 in the rotational direction change. Therefore, the magnetic flux guided from the permanent magnet 21 to the first magnetic flux collecting ring 44 through the first yoke 31 changes. The relative positions of the permanent magnet 21 and the second yoke 32 in the rotational direction also change. Therefore, the magnetic flux guided from the permanent magnet 21 to the second magnetic flux collecting ring 54 through the second yoke 32 changes.

Each of the first magnetic sensor 47A and the second magnetic sensor 47B generates an electrical signal according to the magnetic flux leaking between a corresponding one of the first magnetic flux collecting protrusions 44A of the first magnetic flux collecting ring 44 and a corresponding one of the second magnetic flux collecting protrusions of the second magnetic flux collecting ring 54. The electrical signal changes according to the torsional deformation of the torsion bar 13, that is, the torsion angle of the torsion bar 13. For example, the control device for the steering system calculates the torque acting on the torsion bar 13 based on the electrical signals generated by the first magnetic sensor 47A and the second magnetic sensor 47B. The torque is a physical quantity related to the rotational motion of the rotation shaft 11.

### <Configuration of Board-In Connector 45>

Next, the configuration of the board-in connector 45 will be described in detail. As shown in FIG. 3, the board-in connector 45 includes a housing 60 and a cover 70. The housing 60 and the cover 70 are combined together. The second end of the electric wire 46 is held by being sandwiched between the housing 60 and the cover 70. The terminal 48 is housed inside the board-in connector 45. The pin 48A protrudes from the surface of the housing 60 to which the cover 70 is attached. The first end (not shown) of the electric wire 46 is led to the outside of the board-in connector 45.

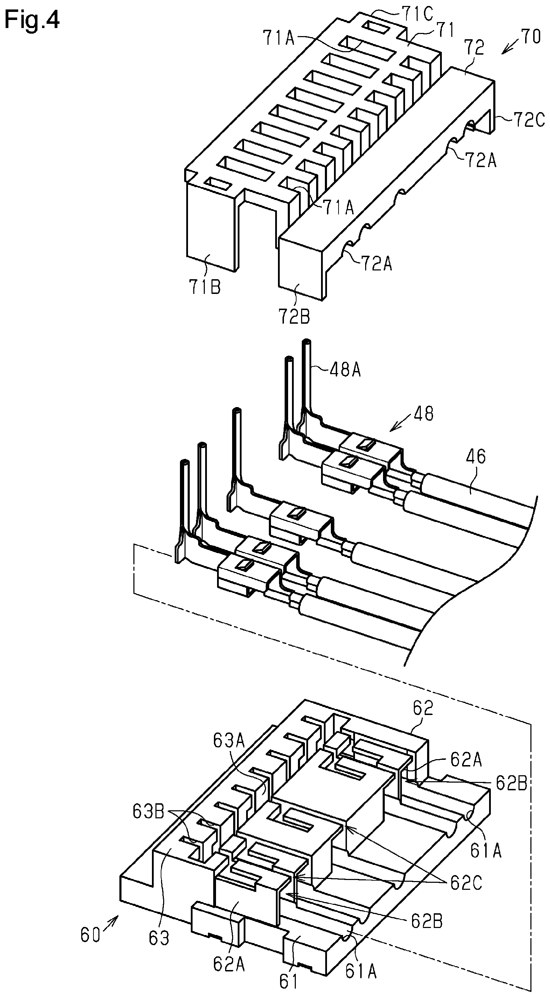

As shown in FIG. 4, the housing 60 is a resin molded product having a rectangular parallelepiped shape. The housing 60 includes a first electric wire clamping portion 61, a terminal holding portion 62, and an exposed portion 63. The terminal holding portion 62 is located between the first electric wire support portion 61 and the exposed portion 63 in the short side direction of the housing 60.

The first electric wire clamping portion 61 is in the form of a flat plate. The first electric wire clamping portion 61 has a plurality of first guide grooves 61A. The first guide groove 61A is an arc groove extending along the short side direction of the housing 61. The plurality of first guide grooves 61A is arranged at intervals along the long side direction of the housing 61. The first guide groove 61A supports the electric wire 47.

The terminal holding portion 62 includes a plurality of partition walls 62A. The partition wall 62A is disposed in correspondence with the first guide groove 61A. The partition wall 62A includes a first wall and a second wall. The first wall is a wall extending in the thickness direction of the housing 61. The second wall is a wall provided at a distal end of the first wall, and extends in the long side direction of the housing 60. The partition wall 62A forms a terminal insertion portion 62B. The terminal insertion portion 62B is a rectangular parallelepiped space extending in the short side direction of the housing 61. The terminal insertion portion 62B is located on an extension line of the first guide groove 61A. A clearance 62C is provided between the second walls of two partition walls 62A adjacent to each other in the long side direction of the housing 61. The dimension of the clearance 62C is slightly larger than the outside diameter of the pin 48A of the terminal 48. The pin 48A extends in a direction perpendicular to the electric wire 47.

The exposed portion 63 has an opening 63A and a plurality of positioning grooves 63B. The opening 63A extends in the long side direction of the housing 60. The inside of the opening 63A communicates with each terminal insertion portion 62B of the terminal holding portion 62. The positioning groove 63B is provided in the opposite inner side surface of the opening 63A from the terminal holding portion 62 in the short side direction of the housing 60. The plurality of positioning grooves 63B is arranged at intervals along the long side direction of the housing 61. The positioning groove 63B is a cut groove that is open to the opening 63A and in the protruding direction of the partition wall 62A. The dimension of the positioning groove 63B in the long side direction of the housing 60 is the same as or slightly larger than the outside diameter of the pin 48A.

As shown in FIG. 4, the cover 70 is attached to the housing 60 from the opening 63A side. The cover 70 is a resin molded product, and includes a covering portion 71 and a second electric wire clamping portion 72.

The covering portion 71 is a portion for covering the terminal holding portion 62 of the housing 60. The covering portion 71 is in the form of an L-shaped plate. The covering portion 71 includes a first portion in the form of a flat plate and a second portion in the form of a flat plate. The first portion is a portion of the covering portion 71 for covering a distal end of the terminal holding portion 62 that includes the second walls. The second portion is a portion perpendicular to the first portion and is a portion of the covering portion 71 that covers the opposite side surface of the terminal holding portion 62 from the opening 63A.

The covering portion 71 has a plurality of resin inlet holes 71A. The resin inlet hole 71A is, for example, a rectangular hole. The resin inlet holes 71A are disposed in two rows along the long side direction of the housing 60. The resin inlet holes 71A in a first row extend through the first portion of the covering portion 71 in its thickness direction. The resin inlet holes 71A in a second row are provided at a corner of the covering portion 71. The corner is a portion where the first portion and the second portion meet. The resin inlet holes 71A in the second row extend through the first portion and the second portion of the covering portion 71 in the same direction as that for the resin inlet holes 71A in the first row.

The covering portion 71 includes a first arm 71B and a second arm 71C. The first arm 71B and the second arm 71C are provided on two opposite side edges of the covering portion 71 in the long side direction. The first arm 71B and the second arm 71C are in the form of a flat plate and extend in the attachment direction of the cover 70. The first arm 71B and the second arm 71C are each provided with a claw (not shown) at their distal ends.

The second electric wire clamping portion 72 is a portion corresponding to the first electric wire clamping portion 61 of the housing 60 and is a portion for clamping the electric wires 46 between the second electric wire clamping portion 72 and the first electric wire clamping portion 61. The second electric wire clamping portion 72 is in the form of a rectangular flat plate. The second electric wire clamping portion 72 has a plurality of second guide grooves 72A. The second guide groove 72A is an arc groove extending along the short side direction of the second electric wire clamping portion 72. The plurality of second guide grooves 72A is disposed at intervals along the long side direction of the second electric wire clamping portion 72. The second guide groove 72A is disposed at a position corresponding to the first guide groove 61A of the housing 60.

The second electric wire clamping portion 72 includes a third arm 72B and a fourth arm 72C. The third arm 72B and the fourth arm 72C are provided on two opposite side edges of the second electric wire clamping portion 72 in the long side direction. The third arm 72B and the fourth arm 72C are in the form of a flat plate and extend in the attachment direction of the cover 70. The third arm 72B and the fourth arm 72C are each provided with a claw (not shown) at their distal ends.

### <Configuration of Terminal 48>

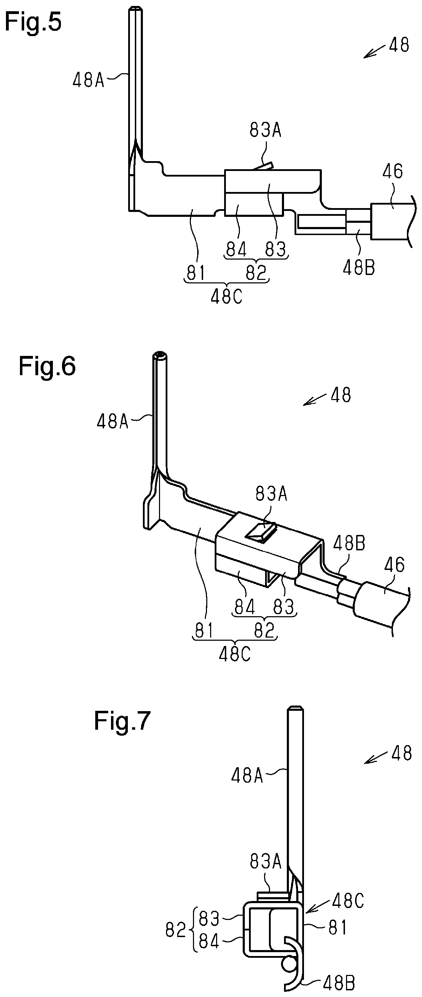

Next, the configuration of the terminal 48 will be described in detail. As shown in FIG. 5, the terminal 48 is formed by, for example, plastically deforming a piece of sheet metal cut into a predetermined shape by blanking. The terminal 48 includes the pin 48A, a connection portion 48B, and a coupling portion 48C.

The pin 48A is provided at a first end of the terminal 48. The pin 48A is in the form of a rod. The pin 48A is formed by, for example, plastically deforming part of the piece of sheet metal corresponding to the pin 48A into a tubular shape having a circular cross section.

The connection portion 48B is provided at a second end of the terminal 48. The second end is the opposite end of the terminal 48 from the first end. The connection portion 48B is a portion of the terminal 48 to which the second end of the electric wire 46 is connected. At the second end of the electric wire 46, the core is exposed from the coating. The connection portion 48B and the electric wire 46 are connected by crimping part of the connection portion 48B such that the connection portion 48B encloses the exposed core. The connection portion 48B includes a flat portion. The flat portion is a portion of the connection portion 48B that is in the form of a flat plate and that extends along the core exposed from the crimped part of the connection portion 48B.

The coupling portion 48C is an intermediate portion of the terminal 48 that couples the pin 48A and the connection portion 48B. As shown in FIG. 6, the coupling portion 48C includes a coupling portion body 81 and a projecting portion 82.

The coupling portion body 81 is in the form of a rectangular flat plate. The short sides of the coupling portion body 81 extend along the pin 48A. The long sides of the coupling portion body 81 extend in a direction perpendicular to the pin 48A. A first end of the coupling portion body 81 in its long side direction is coupled to the proximal end of the pin 48A. The pin 48A and the coupling portion body 81 form a first corner. A second end of the coupling portion body 81 in its long side direction is coupled to the flat portion of the connection portion 48B. When viewed in a direction perpendicular to the coupling portion body 81, the coupling portion body 81 is coupled to the opposite part of the flat portion from the first guide groove 51A with the electric wire 46 supported in the first guide groove 61A. The coupling portion body 81 and the connection portion 48B form a second corner.

The projecting portion 82 projects laterally from the coupling portion body 81. The projecting portion 82 extends in the long side direction of the coupling portion body 81 and has a tubular shape with a polygonal cross section. The projecting portion 82 includes a first projecting piece 83 and a second projecting piece 84.

The first projecting piece 83 is provided on a first long side of the coupling portion body 81. The first projecting piece 83 includes a first wall and a second wall. The first wall is in the form of a rectangular plate. The first wall is perpendicular to the coupling portion body 81. The second wall is in the form of a rectangular plate. The second wall is coupled to the opposite end of the first wall from the coupling portion body 81. The second wall is parallel to the coupling portion body 81.

The first wall includes a protrusion 83A. The protrusion 83A is in the form of a rectangular plate. The protrusion 83A is formed by lancing. That is, the protrusion 83A is formed by forming, in the first wall, cuts corresponding to three sides of the protrusion 83A and bending the cut portion. The bending direction is opposite to the bending direction of the second wall. The protrusion 83A is open on the opposite side from the pin 48A.

The second projecting piece 84 is provided on a second long side of the coupling portion body 81. The length of the coupling portion body 81 in its long side direction is smaller than the length of the first projecting piece 83 in its long side direction. The second projecting piece 84 includes a third wall and a fourth wall. The third wall is in the form of a rectangular plate. The third wall is perpendicular to the coupling portion body 81. The fourth wall is in the form of a rectangular plate. The fourth wall is coupled to the opposite end of the third wall from the coupling portion body 81. The fourth wall is parallel to the coupling portion body 81. The opposite end of the fourth wall from the third wall is kept, along its entire length, in contact with the opposite end of the second wall from the first wall.

As shown in FIG. 7, the projecting portion 82 is in the shape of a closed loop when viewed in a direction from the connection portion 48B toward the pin 48A. The loop has a quadrilateral shape. The first projecting piece 83 and the second projecting piece 84 form a single tube. The tube has a polygonal cross section. FIG. 7 shows the connection portion 48B before it is crimped.

As shown in FIG. 5, the terminal 48 has a crank shape when viewed in a direction perpendicular to the direction from the connection portion 48B toward the pin 48A. The crank shape is the shape obtained by joining two right-angle curves turning in opposite directions. The first corner formed by the pin 48A and the coupling portion body 81 and the second corner formed by the coupling portion body 81 and the connection portion 48B are portions of the terminal 48 corresponding to the right-angle curves.

### <Assembling Procedure for Board-In Connector 45>

Next, an assembling procedure for the board-in connector 45 will be described. As shown in FIG. 4, each terminal 48 is first inserted into a corresponding one of the terminal insertion portions 62B of the terminal holding portion 62 from the opposite side from the opening 63A. Each terminal 48 is inserted into a corresponding one of the terminal insertion portions 62B to the position where the pin 48A reaches the end wall of a corresponding one of the positioning grooves 63B in the insertion direction. Each terminal 48 is thus positioned in the insertion direction of the terminal 48, that is, the short side direction of the housing 60. The positioning groove 63B includes two inner side surfaces that face each other in the long side direction of the housing 60. Movement of the pin 48A in the long side direction of the housing 60 is restricted as the pin 48A contacts the inner side surface of the positioning groove 63B in the long side direction of the housing 60. Each terminal 48 is thus positioned in the long side direction of the housing 60. The second end of the electric wire 46 is kept supported by the first guide groove 61A. In this state, the cover 70 is attached to the housing 60 from the side facing the opening 63A.

The claws of the first arm 71B, the second arm 71C, the third arm 72B, and the fourth arm 72C of the cover 70 elastically engage with part of the housing 60 in a direction opposite to the attachment direction. This reduces detachment of the cover 70 from the housing 60. The cover 70 is kept attached to the housing 60. The assembling work for the board-in connector 45 is thus completed.

### <Assembled State of Board-In Connector 45>

Next, the assembled state of the board-in connector 45 will be described. As shown in FIG. 3, in the state in which the cover 70 is attached to the housing 60, the exposed portion 63 is exposed to the outside without being covered by the cover 70. The pin 48A protrudes from the positioning groove 63B in the direction opposite to the attachment direction of the cover 70. The opening 63A and the terminal holding portion 62 of the housing 60 are covered by the covering portion 71. However, the opening 63A and the terminal insertion portions 62B are open to the outside via the resin inlet holes 71A of the cover 70.

In the state in which the cover 70 is attached to the housing 60, the second electric wire clamping portion 72 is kept on top of the first electric wire clamping portion 61 in the attachment direction of the cover 70. The second end of the electric wire 46 is sandwiched between the first guide groove 61A and the second guide groove 72A. This restricts movement of the second end of the electric wire 46 in the long side direction of the board-in connector 45. The second end of the electric wire 46 is held at a predetermined position.

The housing 60 corresponds to a first holding member, and the cover 70 corresponds to a second holding member.

### <Method for Manufacturing First Sensor Housing 40>

Next, a method for manufacturing the first sensor housing 40 will be described.

First, the first magnetic flux collecting ring 44 and the board-in connector 45 that are inserts are set in an open mold. The board-in connector 45 is holding the electric wires 46. The mold is then closed, and injection molding is performed. When the mold is closed, a cavity is formed inside the mold. The cavity is a space corresponding to the outer shape of the first sensor housing 40.

Next, molten resin is injected into the cavity. The molten resin is synthetic resin melted by heating. Inside the mold, the first magnetic flux collecting ring 44 other than its inner peripheral surface is encapsulated with the molten resin. The board-in connector 45 other than at least its first end is encapsulated with the molten resin. The molten resin also flows into the terminal insertion portions 62B and the opening 63A via the resin inlet holes 71A of the cover 70. That is, the resin inlet hole 71A is configured to guide the molten resin into the inside of the terminal holding portion 62.

After the cavity is filled with the molten resin, the molten resin filling the cavity is cured by cooling. The mold is then opened, and the first sensor housing 40 that is a resin molded product is removed. The first sensor housing 40 shown in FIG. 2, that is, the first sensor housing 40 with the first magnetic flux collecting ring 44 and the board-in connector 45 embedded therein, is thus obtained.

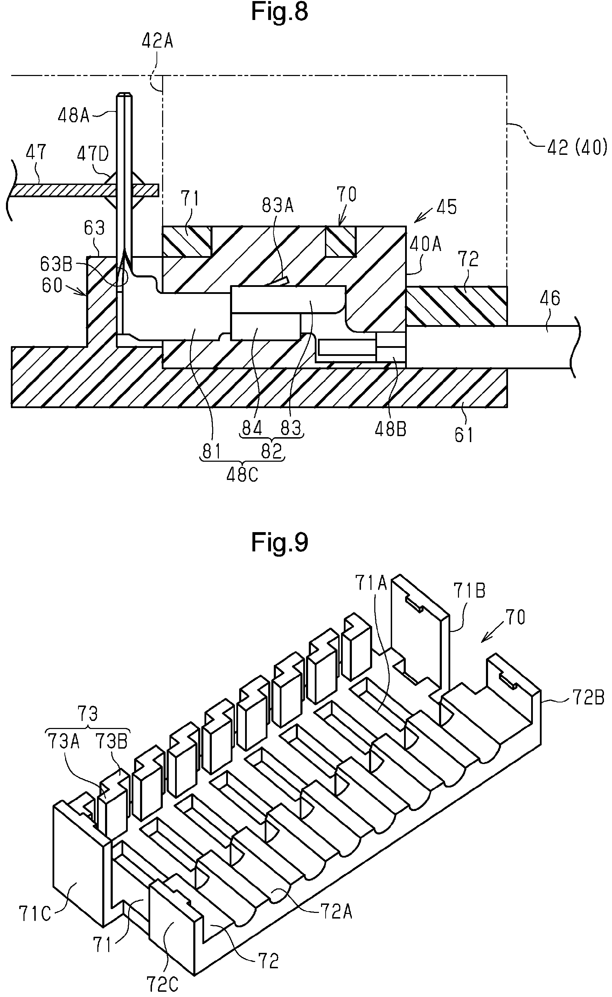

The manufacture of the first sensor housing 40 is completed in this manner. As shown in FIG. 8, the pins 48A are inserted into the terminal connection holes 47C of the board 47 after the first sensor housing 40 is removed from the mold. The pins 48A are joined to the board 47 by solder 47D. The pins 48A and pattern wiring on the board 47 are electrically connected.

### <Internal State of Board-In Connector 45>

The internal state of the board-in connector 45 is as follows. As shown in FIG. 8, inside the board-in connector 45, the periphery of the coupling portion 48C of the terminal 48 is covered with the synthetic resin. That is, the opening 63A and each terminal insertion portion 62B of the housing 61 are filled with the synthetic resin. The inside of the projecting portion 82 is also filled with the synthetic resin. A clearance between the coupling portion 48C and the partition wall 62A (see FIG. 4) is also filled with the synthetic resin. The clearance 62C (see FIG. 4) between two partition walls 62A adjacent to each other in the long side direction of the housing 61 is also filled with the synthetic resin. The protrusion 83A digs into the synthetic resin. The digging direction is opposite to the direction in which the terminal 48 is inserted into the terminal insertion portion 62B. Since the space around the coupling portion 48C is filled with the resin without leaving any gap, the terminal 48 is held inside the terminal insertion portion 62B. FIG. 8 shows only the board-in connector 45, the synthetic resin filling the board-in connector 45, etc. for illustrative purposes. A synthetic resin portion 40A that covers at least the periphery of the coupling portion 48C of the terminal 48 is part of the first sensor housing 40.

The first sensor housing 40 corresponds to a resin member that covers the periphery of the coupling portion 48C of the terminal 48, the periphery of the housing 60, and the periphery of the cover 70. The coupling portion 48C is a portion of the terminal 48 that is held inside the terminal holding portion 62.

### <Supplementary Description of Board-In Connector 45>

There are the following concerns about the sensor device 10. That is, during the injection molding of the first sensor housing 40, the molten resin may flow into a portion where it is not supposed to. For example, during the injection molding of the first sensor housing 40, the molten resin flowing in from the resin inlet holes 71A of the cover 70 may flow into the positioning grooves 63B via the terminal insertion portions 62B and the opening 63A. In this case, the molten resin that has flowed into the positioning grooves 63B may overflow onto the surface of the exposed portion 63 on the side opposite to the attachment direction of the cover 70, i.e., on the side from which the pins 48A protrude.

Accordingly, in the present embodiment, the following configuration is used for the board-in connector 45. As shown in FIG. 9, the cover 70 includes a plurality of blocking protrusions 73. The blocking protrusions 73 are provided in the same number as the terminal insertion portions 62B. The blocking protrusion 73 is provided on the inner surface of the covering portion 71. The blocking protrusion 73 is provided on the opposite side edge of the covering portion 71 from the second electric wire clamping portion 72 in the short side direction. The blocking protrusions 73 are arranged in a row at intervals in the long side direction of the covering portion 71. The long side direction of the covering portion 71 is also the long side direction of the cover 70. The blocking protrusion 73 protrudes from the inner surface of the covering portion 71 in the attachment direction of the cover 70. The protruding height of the blocking protrusion 73 from the inner surface of the covering portion 71 is the same as the depth of the opening 63A in the thickness direction of the housing 61.

The blocking protrusion 73 has a crank shape in cross section. The blocking protrusion 73 includes a first fitting portion 73A and a second fitting portion 73B. The first fitting portion 73A and the second fitting portion 73B each have a rectangular parallelepiped shape. The long sides of the first fitting portion 73A and the long sides of the second fitting portion 73B each extend in the long side direction of the covering portion 71. The first fitting portion 73A and the second fitting portion 73B are connected together so as to be shifted from each other in the long side direction of the covering portion 71. The corner of the first fitting portion 73A on the side connected to the second fitting portion 73B is a first corner of the crank. The corner of the second fitting portion 73B on the side connected to the first fitting portion 73A is a second corner of the crank. The first fitting portions 73A are arranged in a row at intervals in the long side direction of the covering portion 71. The second fitting portions 73B are arranged in a row at intervals in the long side direction of the covering portion 71.

The length of the connection portion of the first fitting portion 73A and the second fitting portion 73B in the short side direction of the covering portion 71 is, for example, the same as the length of the opening 63A in the short side direction of the housing 61. The plurality of blocking protrusions 73 can be fitted in the opening 63A. In two blocking protrusions 73 adjacent to each other in the long side direction of the covering portion 71, the first fitting portion 73A of one blocking protrusion 73 and the second fitting portion 73B of the other blocking protrusion 73 are separated from each other by a distance corresponding to the thickness of the coupling portion body 81 of the terminal 48.

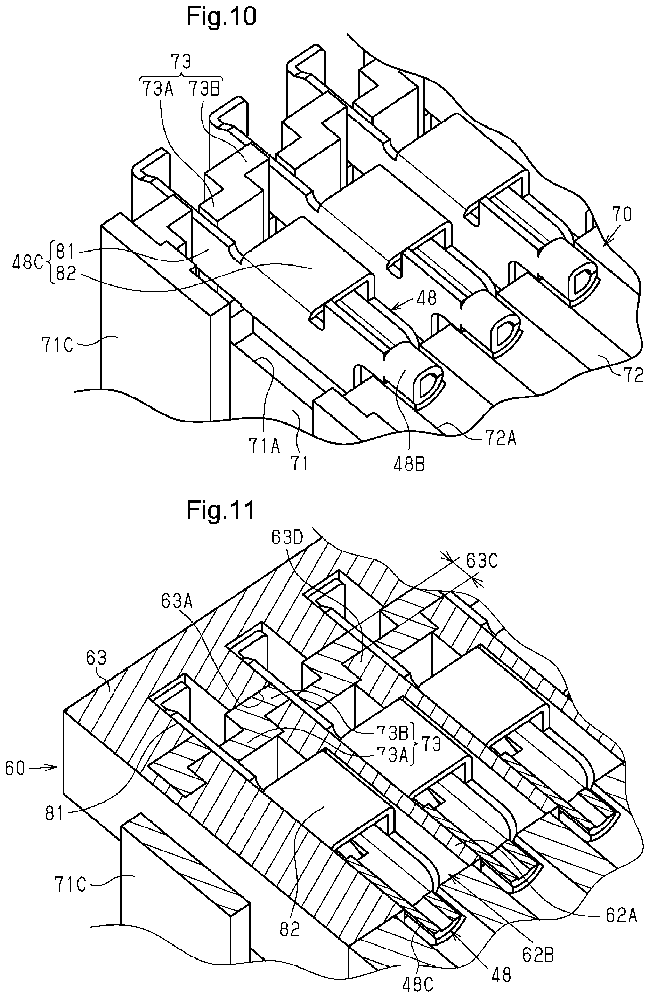

As shown in FIG. 10, in two blocking protrusions 73 adjacent to each other in the long side direction of the covering portion 71, the coupling portion body 81 of the terminal 48 can be interposed between the first fitting portion 73A of one blocking protrusion 73 and the second fitting portion 73B of the other blocking protrusion 73. The length of the blocking protrusion 73 in the long side direction of the covering portion 71 is the same as the distance between two adjacent coupling portion bodies 81. The blocking protrusion 73 can be interposed between two adjacent coupling portion bodies 81. FIG. 10 shows the cover 70 as viewed from the inside, with the terminals 48 shown attached to the cover 70 for illustrative purposes.

As shown in FIG. 11, the opening 63A has a plurality of narrow portions 63C. The width of the narrow portion 63C is the same as the width of the second fitting portion 73B of the blocking protrusion 73. The width is the length in the insertion direction of the terminal 48. The second fitting portion 73B can be fitted in the narrow portion 63C. The width of the opening 63A other than the narrow portions 63C is the same as the width of the widest portion of the blocking protrusion 73, that is, the width of the connection portion of the first fitting portion 73A and the second fitting portion 73B. FIG. 11 shows the board-in connector 45 as viewed from the opposite side from the cover 70, illustrating the board-in connector 45 cut near the inner end wall of the opening 63A.

The narrow portion 63C is formed by providing a short protrusion 63D on the inner end wall of the opening 63A. The end wall is a flat surface extending in a direction perpendicular to the depth direction of the opening 63A. The height of the short protrusion 63D from the end wall is small enough for the short protrusion 63D not to be exposed from the opening 63A. The amount of protrusion of the short protrusion 63D may be small. The narrow portions 63C are arranged at intervals in the arrangement direction of the terminals 48. The arrangement interval of the narrow portions 63C is also the arrangement interval of the short protrusions 63D. The interval is the same distance as the sum of the length of the first fitting portion 73A in the arrangement direction of the terminals 48 and the thickness of the coupling portion body 81 of the terminal 48. A side surface of the coupling portion body 81 of the terminal 48 is in contact with the first wall of the partition wall 62A. The first fitting portion 73A can be fitted between the short protrusion 73C and the coupling portion body 81.

### <Functions of Embodiment>

The present embodiment has the following functions. As shown in FIG. 11, after the work of attaching the terminals 48 to the housing 60 is completed, the cover 70 is attached to the housing 60. When the cover 70 is attached to the housing 60, the blocking protrusions 73 are inserted into the opening 63A of the housing 60. The first fitting portion 73A of the blocking protrusion 73 is thus fitted between the coupling portion body 81 of the terminal 48 and the short protrusion 63D. The second fitting portion 73B of the blocking protrusion 73 is also fitted in the narrow portion 63C.

When the distal ends of the blocking protrusions 73 come into contact with the internal end wall of the opening 63A, the claws of each arm (71B, 71C, 72B, 72C) of the cover 70 elastically engage with part of the housing 60 in the direction opposite to the attachment direction of the cover 70. The cover 70 is thus fixed to the housing 60, and the assembly work of the board-in connector 45 is completed.

When the board-in connector 45 is in the assembled state, the opposite side surface of the first fitting portion 73A from the short protrusion 63D is kept in contact with a side surface of the coupling portion body 81. A side surface of the second fitting portion 73B is kept in contact with a side surface of the coupling portion body 81 of another terminal 48 adjacent to the terminal 48 with which the first fitting portion 73A is in contact. The blocking protrusion 73 is interposed between the coupling portion bodies 81 of two adjacent terminals 48. The coupling portion body 81 is sandwiched between two adjacent blocking protrusions 73. The coupling portion body 81 is sandwiched between the first fitting portion 73A of a blocking protrusion 73 and the second fitting portion 73B of another blocking protrusion 73.

In two adjacent blocking protrusions 73, an end of the first fitting portion 73A of one blocking protrusion 73 and an end of the second fitting portion 73B of the other blocking protrusion 73 sandwich the coupling portion body 81 of the terminal 48 in the thickness direction at two different positions in the insertion direction of the terminal 48. That is, in two adjacent blocking protrusions 73, an end of the first fitting portion 73A of one blocking protrusion 73 and an end of the second fitting portion 73B of the other blocking protrusion 73 are disposed so as not to face each other with the coupling portion body 81 interposed therebetween.

The end of the first fitting portion 73A is the opposite end of the blocking protrusion 73 from the second fitting portion 73B in the arrangement direction of the terminals 48, and corresponds to a first contact end. The end of the second fitting portion 73B is the opposite end of the blocking protrusion 73 from the first fitting portion 73A in the arrangement direction of the terminals 48, and corresponds to a second contact end.

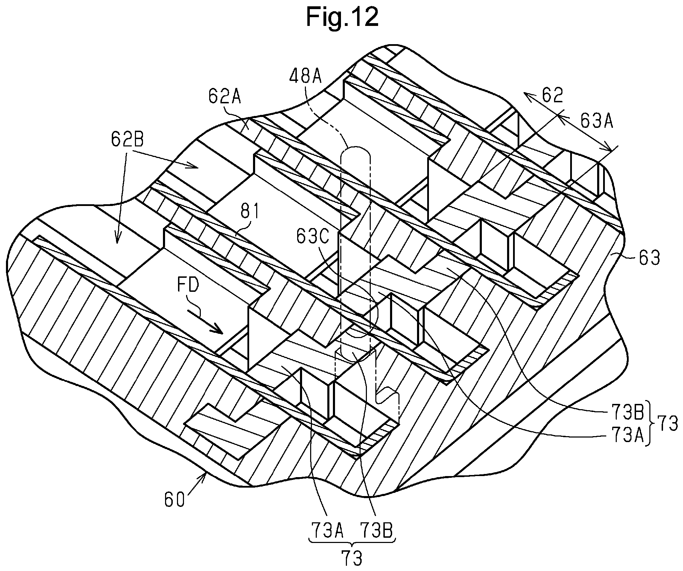

As shown in FIG. 12, when the board-in connector 45 is in the assembled state, the path between the terminal holding portion 62 and the pin 48A is blocked by the blocking protrusion 73 and the coupling portion body 81 of the terminal 48. The path is a portion of the internal space of the board-in connector 45 that extends from the terminal insertion portion 62B to the positioning groove 63B (see FIG. 4). The coupling portion body 81 is part of the terminal 48.

During the injection molding of the first sensor housing 40, the molten resin flows into the terminal insertion portions 62B through the resin inlet holes 71A of the cover 70. However, the molten resin flowing in the direction from the terminal insertion portion 62B toward the opening 63A is blocked by the first fitting portion 73A of the blocking protrusion 73. Therefore, the molten resin is less likely to flow into the positioning groove 63B through the opening 63A.

There may be a case where no terminal 48 is interposed between some pairs of adjacent blocking protrusions 73. Since the terminal insertion portion 62B is not formed at such positions, the molten resin does not flow toward the positioning grooves 63B.

Due to the dimensional tolerance of the cover 70 or the dimensional tolerance of the housing 60, there may be a small gap between the outer side surface of the second fitting portion 73B on the side farther from the terminal insertion portion 62B and the inner side surface of the opening 63A on the side farther from the terminal insertion portion 62B.

In this regard, the pressure of the molten resin acts on the blocking protrusion 73 during the injection molding of the first sensor housing 40. The direction of the pressure is the same as a flow direction FD of the molten resin, and is, for example, the direction from the terminal insertion portion 62B toward the opening 63A. The pressure of the molten resin presses the blocking protrusion 73 in the flow direction FD of the molten resin. The second fitting portion 73B of the blocking protrusion 73 is thus pressed in the flow direction FD of the molten resin against the inner side surface of the opening 63A on the side farther from the terminal insertion portion 62B.

As a result, the outer side surface of the second fitting portion 73B on the side farther from the terminal insertion portion 62B and the inner side surface of the opening 63A on the side farther from the terminal insertion portion 62B are brought into close contact with each other in the flow direction FD of the molten resin. Therefore, the molten resin is less likely to flow into the positioning groove 63B through the opening 63A.

The inner side surface of the opening 63A on the side farther from the terminal insertion portion 62B is part of the housing 60 in the insertion direction of the terminal 48.

### <Effects of Embodiment>

The present embodiment has the following effects.
(1) The blocking protrusion 73 is provided at a position closer to the pin 48A than the resin inlet hole 71A. In other words, the blocking protrusion 73 is provided between the resin inlet hole 71A and the pin 48A. The terminal holding portion 62 and the pin 48A are isolated from each other by the blocking protrusion 73 and the coupling portion body 81 of the terminal 48. During the injection molding of the first sensor housing 40, the molten resin flowing in the direction from the terminal insertion portion 62B toward the opening 63A is blocked by the blocking protrusion 73. Therefore, the molten resin is less likely to flow into the positioning groove 63B through the opening 63A. Accordingly, the molten resin is less likely to flow into a portion where it is not supposed to.
(2) The blocking member 73 is interposed between two adjacent terminals 48 without leaving any gap. Therefore, during the injection molding of the first sensor housing 40, the blocking protrusion 73 can appropriately block the molten resin flowing in the direction from the terminal insertion portion 62B toward the opening 63A.
(3) Two adjacent blocking protrusions 73 sandwich the coupling portion body 81 of one terminal 48 at two different positions in the insertion direction of the terminal 48. That is, in two adjacent blocking protrusions 73, the first fitting portion 73A of one blocking protrusion 73 and the second fitting portion 73B of the other blocking protrusion 73 do not face each other with the coupling portion body 81 interposed therebetween. Since the cover 70 does not have a clearance portion corresponding to the thickness of the coupling portion body 81, it is easy to make a mold. Accordingly, the cover 70 that is a resin molded product can be easily molded.
   It is also possible to provide the blocking protrusions 73 in the shape of a single rectangular parallelepiped and to cause two blocking protrusions 73 adjacent to each other in the arrangement direction of the terminals 48 to face each other with the coupling portion body 81 interposed therebetween. In this case, in two adjacent blocking protrusions 73, a very small clearance corresponding to the thickness of the coupling portion body 81 needs to be provided between one blocking protrusion 73 and the other blocking protrusion 73. It takes a lot of time and effort to produce a mold with a fine feature corresponding to the very small clearance.
(4) During the injection molding of the first sensor housing 40, the pressure of the molten resin presses the second fitting portion 73B of the blocking protrusion 73 against the inner side surface of the opening 63A on the side farther from the terminal insertion portion 62B. As a result, the outer side surface of the second fitting portion 73B on the side farther from the terminal insertion portion 62B and the inner side surface of the opening 63A on the side farther from the terminal insertion portion 62B are brought into close contact with each other. Therefore, the molten resin is less likely to flow into the positioning groove 63B through the opening 63A.
(5) Each terminal insertion portion 62B of the housing 61 is filled with the synthetic resin without leaving any gap. This reduces entry of dust etc. into the board-in connector 45. The dust-proofness of the board-in connector 45 can be improved.

### <Other Embodiments>

The present embodiment may be modified as follows.
- The blocking protrusions 73 may be in the shape of a single rectangular parallelepiped. In this case, for example, two adjacent blocking protrusions 73 are disposed so as not to face each other in the arrangement direction of the terminals 48. In other words, the plurality of blocking protrusions 73 is alternately located at two different positions in the insertion direction of the terminals 48. In this case as well, the cover 70 does not have a clearance portion corresponding to the thickness of the coupling portion body 81. It is therefore easy to make a mold.
- The sensor device 10 may be a rotation angle sensor that detects the rotation angle of the rotation shaft 11. In this case, for example, a drive gear is attached to the outer peripheral surface of the rotation shaft 11 so as to be rotatable with the rotation shaft 11. Two driven gears are rotatably supported in the board housing portion 42A of the first sensor housing 40. The driven gears have different numbers of teeth. The board 47 is provided with sensors that generate electrical signals according to the rotation angles of the driven gears. The driven gears mesh with the drive gear via an opening provided in a portion of the first sensor housing 40 that is located between the board housing portion 42A and the first insertion hole 43. Therefore, the two driven gears rotate in conjunction with rotation of the drive gear. Since the two driven gears have different numbers of teeth, the rotation angles of the two driven gears relative to the rotation angle of the drive gear are different. Therefore, the electrical signals generated by the first sensor and the second sensor have different phases. For example, the control device for the steering system detects the rotation angle of the rotation shaft 11 based on the electrical signals generated by the first sensor and the second sensor.

## Claims

1. An insert molded product comprising:
a terminal including a first end provided with a pin, and a second end located on an opposite side from the first end;
a first holding member including a terminal holding portion that holds the terminal in a state in which the terminal is inserted in the terminal holding portion;
a second holding member combined with the first holding member and including a covering portion that covers the terminal holding portion; and
a resin member covering a periphery of a portion of the terminal that is located inside the terminal holding portion, a periphery of the first holding member, and a periphery of the second holding member, wherein:
the covering portion includes
a resin inlet hole configured to guide molten resin into the terminal holding portion during molding of the resin member, and
a protrusion provided at a position closer to the pin than the resin inlet hole and combined with the first holding member; and
the terminal holding portion and the pin are isolated from each other by the protrusion and the portion of the terminal.

2. The insert molded product according to claim 1, wherein:
a plurality of the terminals is arranged in a direction perpendicular to a direction in which the terminal is inserted into the terminal holding portion;
a plurality of the protrusions is arranged in the direction in which the terminals are arranged; and
each of the protrusions is interposed between adjacent two of the terminals.

3. The insert molded product according to claim 2, wherein:
each of the protrusions includes a first contact end and a second contact end that are located on opposite sides of the protrusion in the direction in which the terminals are arranged;
the first contact end and the second contact end are located at different positions in the direction in which the terminal is inserted; and
in two of the protrusions that are adjacent to each other in the direction in which the terminals are arranged, the portion of the terminal is sandwiched between the first contact end of one protrusion and the second contact end of the other protrusion.

4. The insert molded product according to claim 2, wherein the protrusion is in close contact with a portion of the first holding member in the direction in which the terminal is inserted.

5. A sensor device comprising the insert molded product according to any one of claims 1 to 4.
